# EUROPÄISCHE PATENTANMELDUNG

(11) **EP 1 355 481 A2**
(43) Veröffentlichungstag der Anmeldung: **22.10.2003**
(21) Anmeldenummer: 03005880.4
(22) Anmeldetag: 15.03.2003
(51) Int. Cl.: H04M 11/02

(54) **Verfahren zum Programmieren einer Türsprechanlage**

(30) Priorität: 15.04.2002 DE 10216778
(71) Anmelder: Ritto GmbH & Co.KG, 35708 Haiger (DE)
(72) Erfinder: Heppner, Manfred, 35708 Haiger (DE); Schneider, Thorsten, 35096 Weimar-Roht (DE); Neumann, Udo, 58579 Schalksmühle (DE)
(74) Vertreter: Fleck, Hermann-Josef, Dr.-Ing.

(57) **Zusammenfassung**

Die Erfindung betrifft ein Verfahren zum Programmieren einer Türsprechanlage, wobei einer Ruftaste einer Türstation eine Wohnungsstation zugeordnet wird, wobei an der Wohnungsstation mittels Betätigung eines Programmierschalters die Türsprechanlage in einen Programmiermodus geschaltet wird, und wobei mittels Betätigung der Ruftaste die Zuordnung zu der Wohnungsstation durchgeführt wird.

Um ein solches Verfahren von einer einzigen Person durchführen zu können, ist es vorgesehen, dass mit der Betätigung des Schalters der Wohnungsstation eine Zeitschleife mit vorbestimmter Zeitdauer geöffnet wird, innerhalb der mittels Drücken der Ruftaste die Zuordnung zu der Wohnungsstation durchführbar ist.

## Beschreibung

Die Erfindung betrifft ein Verfahren zum Programmieren einer Türsprechanlage, wobei einer Ruftaste einer Türstation eine Wohnungsstation zugeordnet wird, wobei an der Wohnungsstation mittels Betätigung eines Programmierschalters die Türsprechanlage in einen Programmiermodus geschaltet wird, und wobei mittels Betätigung der Ruftaste die Zuordnung zu der Wohnungsstation durchgeführt wird.

Die Erfindung betrifft auch ein Verfahren zum Programmieren einer Türsprechanlage, wobei einer Ruftaste einer Türstation eine Wohnungsstation zugeordnet wird, wobei die Türsprechanlage über ein zentrales Netzgerät in einen Programmiermodus überführt wird, und wobei mittels Betätigung der Ruftaste die Zuordnung zu der Wohnungsstation durchgeführt wird.

Es sind Programmierverfahren bekannt, bei denen zur Zuordnung der Ruftaste an der Wohnungsstation bei abgehobenen Handapparat (Hörer) eine Programmiertaste betätigt und gehalten werden muss. Über den Handapparat kann dann eine zweite, an der Wohnungsstation stehende Person aufgefordert werden, die entsprechende Ruftaste zu betätigen. Für dieses Programmierverfahren werden stets zwei Personen benötigt. Oft ist auch die Wohnungsstation für den Programmiervorgang nicht zugänglich, wenn der entsprechende Wohnungseigentümer nicht zugegen ist.

Es ist Aufgabe der Errindung, ein Verfahren der eingangs erwähnten Art zu schaffen, bei der eine Progammierung mit einer einzigen Person duchführbar ist.

Diese Aufgabe wird dadurch gelöst, dass mit der Betätigung des Schalters der Wohnungsstation eine Zeitschleife mit vorbestimmter Zeitdauer geöffnet wird, innerhalb der mittels Drücken der Ruftaste die Zuordnung zu der Wohnungsstation durchführbar ist. Nachdem die Zeitschleife geöffnet ist, steht der Person an der Wohnungsstation ausreichend Zeit zur Verfügung, um sich zur Türstation zu begeben und dort die entsprechende Ruftaste zu drücken. Damit läßt sich die Programmierung von einer oder wahlweise auch von zwei Personen durchführen.

Gemäß einer bevorzugten Erfindungsausgstaltung kann es vorgesehen sein, dass ein Handapparat (Hörer) der Wohnungsstation abgehoben wird, dass anschließend der Progammierschalter betätigt wird, dass dann der Handapparat wieder aufgelegt und ein Gabelschalter ausgelöst wird, und dass anschließend die Zeitschleife geöffnet wird.

Um zu verhindern, dass dann unbeabsichtigt eine falsche Ruftastenzuordnung durch eine unbeteiligte Person geschieht, wenn der Progammierer vergißt, die Ruftaste zu drücken, kann es vorgesehen sein, dass nach Ablauf der vorbestimmten Zeitdauer der Zeitschleife die Türsprechanlage den Programmiermodus verläßt und in den Betriebsmodus schaltet. Diese Programmierbarkeit der Türsprechanlage kann auch dann abgeschlossen werden, wenn vorgesehen ist, dass die Türsprechanlage nach Betätigung der Ruftaste den Programmiermodus verläßt und in den Betriebsmodus schaltet.

Diese Aufgabe wird auch dadurch gelöst, dass mit der Überführung des Netzgerätes in den Programmiermodus eine Zeitschleife mit vorbestimmter Zeitdauer geöffnet wird, innerhalb der mittels Drücken der Ruftaste die Zuordnung zu der Wohnungsstation durchführbar ist. Das Zeitintervall gibt dem Programmierer ausreichend Gelegenheit, die zugehörige Ruftaste zu betätigen. Hierbei kann es zur Vereinfachung des Arbeitsablaufes vorgesehen sein, dass das Netzgerät über eine Programmiertaste in den Programmiermodus überführt wird. Um die Programmierung auch dann durchführen zu können, wenn die Wohnungsstation nicht zugänglich ist, kann es vorgesehen sein, dass nach dem Öffnen der Zeitschleife ein der Wohnungsstation zugeordneter, außerhalb der Wohnung befindlicher Etagendrücker betätigt wird und dass anschließend die Ruftaste der Türstation betätigt wird. Bei diesem Vorgehen wird die Ruftastenzuordnung über den stets zugänglichen Etagendrücker erreicht. Damit dabei dem außerhalb der Wohnung stehenden Programmierer die Betriebsbereitschaft der Wohnungsstation erkennbar wird, kann es vorgseehen sein, dass nach Betätigen des Etagendrückers ein akustisches Signal an der Wohnungsstation die Programmierbereitschaft signalisiert.

Die Rückkehr vom Programmiermodus kann wiederum dadurch erreicht werden, dass die Türsprechanlage nach Betätigen der Ruftaste den Programmiermodus verläßt und in den Betriebsmodus schaltet oder dass nach Ablauf der vorbestimmten Zeitdauer der Zeitsschleife die Türsprechanlage den Programmiermodus verläßt und in den Betriebsmodus schaltet.

## Patentansprüche

1. Verfahren zum Programmieren einer Türsprechanlage, wobei einer Ruftaste einer Türstation eine Wohnungsstation zugeordnet wird, wobei an der Wohnungsstation mittels Betätigung eines Programmierschalters die Türsprechanlage in einen Programmiermodus geschaltet wird, und wobei mittels Betätigung der Ruftaste die Zuordnung zu der Wohnungsstation durchgeführt wird,
**dadurch gekennzeichnet,**
**dass** mit der Betätigung des Schalters der Wohnungsstation eine Zeitschleife mit vorbestimmter Zeitdauer geöffnet wird, innerhalb der mittels Drücken der Ruftaste die Zuordnung zu der Wohnungsstation durchführbar ist.

2. Verfahren nach Anspruch 1,
**dadurch gekennzeichnet,**
**dass** ein Handapparat (Hörer) der Wohnungsstation abgehoben wird,
**dass** anschließend der Progammierschalter betätigt wird,
**dass** dann der Handapparat wieder aufgelegt und ein Gabelschalter ausgelöst wird, und
**dass** anschließend die Zeitschleife geöffnet wird.

3. Verfahren nach Anspruch 1 oder 2,
**dadurch gekennzeichnet,**
**dass** nach Ablauf der vorbestimmen Zeitdauer der Zeitschleife die Türsprechanlage den Programmiermodus verläßt und in den Betriebsmodus schaltet.

4. Verfahren nach einem der Ansprüche 1 bis 3,
**dadurch gekennzeichnet,**
**dass** die Türsprechanlage nach Betätigung der Ruftaste den Programmiermodus verläßt und in den Betriebsmodus schaltet.

5. Verfahren zum Programmieren einer Türsprechanlage,
wobei einer Ruftaste einer Türstation eine Wohnungsstation zugeordnet wird, wobei die Türsprechanlage über ein zentrales Netzgerät in einen Programmiermodus überführt wird, und wobei mittels Betätigung der Ruftaste die Zuordnung zu der Wohnungsstation durchgeführt wird,
**dadurch gekennzeichnet,**
**dass** mit der Überführung des Netzgerätes in den Programmiermodus eine Zeitschleife mit vorbestimmter Zeitdauer geöffnet wird, innerhalb der mittels Drücken der Ruftaste die Zuordnung zu der Wohnungsstation durchführbar ist.

6. Verfahren nach Anspruch 5,
**dadurch gekennzeichnet,**
**dass** das Netzgerät über eine Programmiertaste in den Programmiermodus überführt wird.

7. Verfahren nach Anspruch 5 oder 6,
**dadurch gekennzeichnet,**
**dass** nach dem Öffnen der Zeitschleife ein der Wohnungsstation zugeordneter außerhalb der Wohnung befindlicher Etagendrücker betätigt wird und
**dass** anschließend die Ruftaste der Türstation betätigt wird.

8. Verfahren nach Anspruch 7,
**dadurch gekennzeichnet,**
**dass** nach Betätigen des Etagendrückers ein akustisches Signal an der Wohnungsstation die Programmierbereitschaft signalisiert.

9. Verfahren nach einem der Ansprüche 5 bis 8,
**dadurch gekennzeichnet,**
**dass** die Türsprechanlage nach Betätigen der Ruftaste den Programmiermodus verläßt und in den Betriebsmodus schaltet.

10. Verfahren nach einem der Ansprüche 5 bis 9,
**dadurch gekennzeichnet,**
**dass** nach Ablauf der vorbestimmten Zeitdauer der Zeitsschleife die Türsprechanlage den Programmiermodus verläßt und in den Betriebsmodus schaltet.
